# EUROPEAN PATENT SPECIFICATION

(11) **EP 1 654 149 B1**
(45) Date of publication and mention of the grant of the patent: **10.09.2008**
(21) Application number: 04761618.0
(22) Date of filing: 06.08.2004
(51) Int. Cl.: B62D 21/15, B21J 5/12, B21D 9/05

(54) **VEHICLE FRAME HAVING ENERGY MANAGEMENT SYSTEM AND METHOD FOR MAKING SAME**
FAHRZEUGRAHMEN MIT ENERGIEVERWALTUNGSSYSTEM UND HERSTELLUNGSVERFAHREN DAFÜR
CHASSIS DE VEHICULES POSSEDANT UN SYSTEME DE GESTION D'ENERGIE ET PROCEDE DE FABRICATION DE CE CHASSIS

(30) Priority: 06.08.2003 US 492816 P
(43) Date of publication of application: 10.05.2006
(73) Proprietor: Dofasco Tubular Products Inc., Hamilton, ON L8N 3J5 (CA)
(72) Inventor: NEWPORT, Colin, William, Ayr, Ontario N0B 1E0 (CA)
(74) Representative: Flaccus, Rolf-Dieter
(86) International application number: PCT/CA2004/001454
(87) International publication number: WO 2005/014372

(56) References cited:
- WO-A1-02/04253
- GB-A- 2 007 569
- JP-A- 6 278 646
- JP-A- 2001 241 478
- US-A- 5 913 565
- US-A- 6 099 071
- US-B1- 6 293 587
- US-B1- 6 406 088
- PATENT ABSTRACTS OF JAPAN vol. 2003, no. 09, 3 September 2003 (2003-09-03) -& JP 2003 146241 A (NISSAN MOTOR CO LTD), 21 May 2003 (2003-05-21)
- PATENT ABSTRACTS OF JAPAN vol. 010, no. 242 (M-509), 21 August 1986 (1986-08-21) -& JP 61 074713 A (KAWASAKI STEEL CORP), 17 April 1986 (1986-04-17)
- PATENT ABSTRACTS OF JAPAN vol. 2000, no. 21, 3 August 2001 (2001-08-03) -& JP 2001 088737 A (KAWASAKI HEAVY IND LTD), 3 April 2001 (2001-04-03)
- PATENT ABSTRACTS OF JAPAN vol. 1995, no. 02, 31 March 1995 (1995-03-31) -& JP 06 329048 A (MITSUBISHI MOTORS CORP), 29 November 1994 (1994-11-29)

## Description

### BACKGROUND OF THE INVENTION

### FIELD OF THE INVENTION

The present invention relates to systems and methods for absorbing energy during vehicular collision. More specifically, the invention provides vehicle frame side rails having impact energy absorbing sections and methods for forming such side rails.

### DESCRIPTION OF THE PRIOR ART

Vehicle collisions, either between two vehicles or between a vehicle and a stationary object, result in tremendous forces that are transmitted through the vehicle frame, even at reduced speeds. These forces result from the transfer of kinetic energy from the moving object or objects and, if not adequately managed or absorbed, often lead to serious injury to occupants.

Most automobiles are constructed from a conventional structural frame onto which a body and other functional equipment (i.e. engine, passenger compartment etc.) are mounted. The structural frame includes, generally, a pair of side rails extending longitudinally, one on each side of the vehicle, with transversely extending crossmembers connected to the side rails to form a ladder-like arrangement. A passenger space frame is mounted on this assembly as well as a body, engine, and other elements of the vehicle. As is commonly known, bumpers are provided on the front and rear ends of vehicles and form the impact area for most types of collisions. One type of common collisions results from one or more vehicles impacting end to end, which translates the force of the impact through the side rails. Therefore, various efforts have been focussed on absorbing the kinetic energy of an impact on the ends of the side rails, prior to transference to the passenger space frame and the passengers themselves.

Various systems and methods have been proposed to absorb or dissipate the energy generated in a collision. US Patent 5,005,887 discloses a bumper fastening apparatus for absorbing energy transmitted from a bumper before it reaches the vehicle frame, i.e. side rails. The bumper of this reference comprises a hollow body with a core filled with a resilient foam for absorbing energy from an impact. Although minor collisions may be tolerated with this system, much of the energy is still transmitted to the vehicle frame members and, therefore, to the occupants. Furthermore, the bulky bumper required would be difficult to incorporate into specific design constraints meant to be aesthetically pleasing.

US Patent 6,334,518 discloses an impact absorbing mechanism for vehicles. The device comprises a hydraulic energy absorbing device positioned between the bumper and the side rails. Such a system involves additional manufacturing time and increased cost and weight to the vehicle.

US Patent 5,605,353 discloses a system for absorbing energy directed at a cross member before it is transmitted to the side rails.

US publication 2001/0022444 discloses specifically designed side rails including energy absorbing terminal ends. The terminal ends are provided with zones of weakness and are designed to buckle and absorb impact energy. Although effective, these terminal end structures are added components that result in production delays and added component cost.

The document JP-2001-088737-A discloses a unitary hollow structural member for a vehicle frame adapted to be axially deformed upon application of a force on a first end thereof, said member having a body with a generally constant first wall thickness, with the first end of the member either including a weakened section having a generally constant second wall thickness, wherein said second wall thickness is less than said first wall thickness, or including a deformation initiation site comprising a tapered portion, wherein the cross sectional area at said tapered portion is gradually reduced along an axial direction towards said first end.

There exists, therefore, a need for a means of controlling or managing impact energy on a vehicle that is cost effective and does not add to production time or vehicle weight.

### SUMMARY OF THE INVENTION

These objects are achieved by means of a unitary hollow structural member and a method for forming such a member according to claims 1 and 4.

### BRIEF DESCRIPTION OF THE DRAWINGS

These and other features of the preferred embodiments of the invention will become more apparent in the following detailed description in which reference is made to the appended drawings wherein:

Figure 1 is a perspective view of a pair of side rails as known in the prior art.

Figure 2 is side cross sectional view of an end of a side rail according to an embodiment of the present invention.

Figures 3 to 11 are cross sectional views of a forming process according to an embodiment of the present invention.

### DESCRIPTION OF THE PREFERRED EMBODIMENTS

### A) Energy Absorbing End Portion of Structural Members

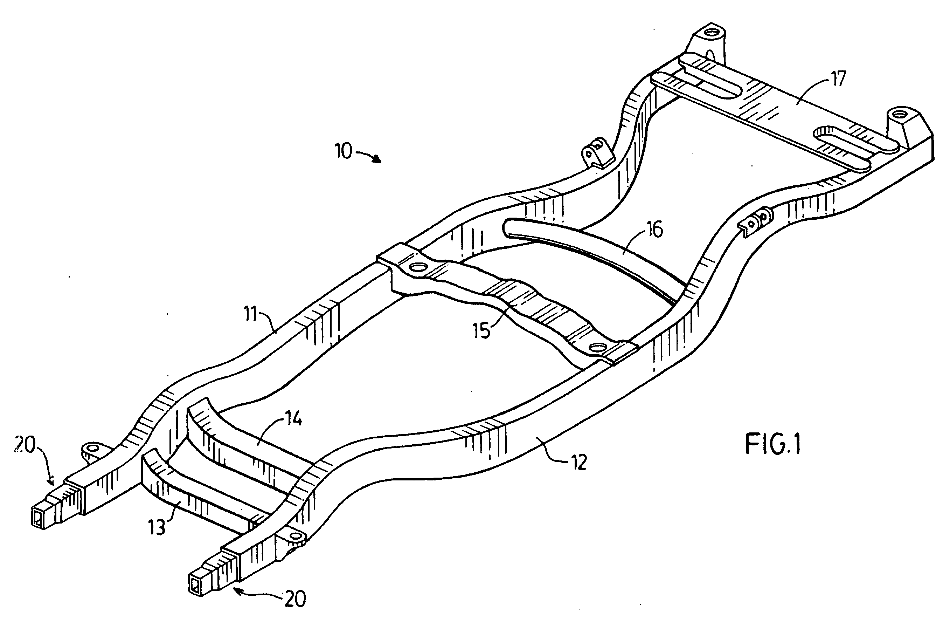

As discussed above, some of the prior art methods for energy management in automobiles involve the attachment, usually by welding, of extensions to the vehicle's side rails, wherein the extensions are engineered to be structurally weaker than the side rails. In this manner, the extensions result in a zone of weakness during a collision and are capable of buckling to absorb the energy of the impact. However, the attachment of these extensions involves extra production time for the welding operation and added material cost. Further, the welding process results in the adjacent areas becoming structurally affected by the heat and may lead to unpredictable mechanical behaviour of such sections during the collision. Figure 1 illustrates a pair of side rails, 11 and 12, as taught in the prior art, having extensions 20 that are structurally weaker than the side rails. Such a side rail construction is taught in US patent application 2001/0022444. Generally, it is known to form members such as side rails from hollow tubes using various commonly known forming methods such as hydroforming and the like.

The present invention provides, in one embodiment, a tailored side rail for automobiles having, integral therewith, a zone of reduced strength. By avoiding the need for welding extensions etc., the present invention provides a cost and time effective solution to the energy management problem as well as a solution that is predictable in its mechanical characteristics.

The following disclosure will refer to an embodiment of the invention involving automobile side rails. However, it will be understood that this is a preferred embodiment of the invention and that the invention is not limited solely to such application. The present invention may, for example, be used for various other structural members where energy management is required. These members include vehicle structural components such as pillars, cradles etc. Further, it will also be understood that the invention can be used for either end of the side rails to accommodate front or rear impacts.

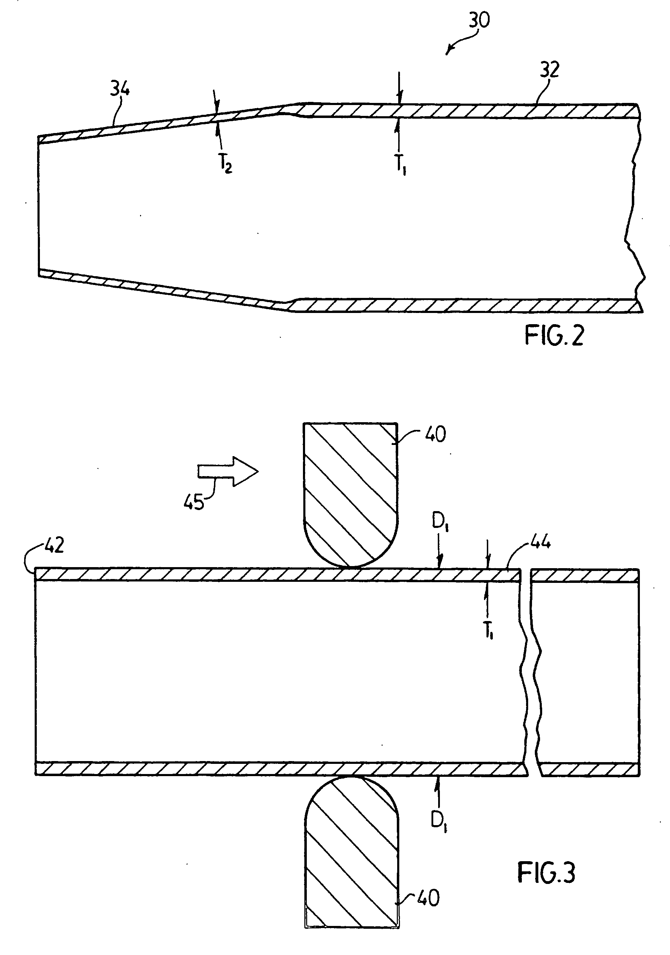

Figure 2 illustrates an end portion of an automobile structural member, such as a side rail, according to the present invention. As can be seen, the structural member 30 comprises a hollow elongate body of any desired shape. The member 30 includes a main body 32 having a first wall thickness or gauge T₁. The member 30 also includes an energy-absorbing end portion 34 that is integral with the main body 32 but is formed of a second wall thickness T₂ that is less than T₁, thereby rendering the end portion 34 structurally weaker than the main body. Further, in accordance with a preferred embodiment, the end portion 34 is tapered as compared to the main body to enhance its energy-absorbing tendency. It will be appreciated by persons skilled in the art that although tapering of the end portion serves to provide an initiation site for energy absorption, the desired effect can also be accomplished with the thin walled section itself or a graduated wall thinning. In the result, the end portion 34 provides a zone of weakness for the member 30 so as to enable it to preferentially become physically deformed in a collision prior to transfer of impact energy to the main body of the member. As indicated above, in one preferred embodiment of the invention, the structural members 30 are side rails and one or both ends of the side rails may be provided with the above-described terminal ends. In other embodiments, other structural members (such as pillars etc.) can also be provided with terminal ends as described above.

It will be understood by persons skilled in the art that the length of the energy-absorbing end portion 34 can be calculated depending on the amount of impact absorption required. The length of the end portion will vary depending on the wall thickness chosen. For example, to absorb a given impact force, the end portion can be tailored by adjusting either or both of the wall thickness, T₂, or the length of the end portion. It will be understood that design constraints may also affect the tailoring aspect. For example, a specific design for an automobile will impose restrictions on the lengths of the side rails and, therefore, in some cases, most of the tailoring will involve adjustment of the wall thickness, T₂. The values of the length and thicknesses of the members can be determined by persons skilled in the art once the amount of energy absorption is defined. The unitary structure of the member 30 avoids any structural variables as would be found if welding processes were used to attach extensions etc. to the side rails.

### B) Method of Forming End Portions

In another embodiment, the present invention provides a method for forming the structural members described above. The method of the invention is illustrated in Figures 3 to 11. The method can be divided into two main stages: gauge reduction and tapering. The gauge reduction step serves to provide the structural member with a weakened end section that serves to absorb the energy of an impact by deforming. The tapering step serves to provide the structural member with an initiation site for such deformation.

### Step 1) Gauge Reduction

The gauge reduction stage is illustrated in Figures 3 to 7. As shown in Figure 3, the first step of the method involves sliding a die 40 over the outer diameter of a first end 42 of a hollow tube 44 having a first wall thickness T₁ and a first outer diameter, D₁. Arrow 45 illustrates the direction of travel of the die over the stationary tube 44. As shown, the die 40 is configured for the tube in that the opening of the die generally corresponds to the outer diameter D₁ of the tube 44. Dies for this step are commonly known in the art.

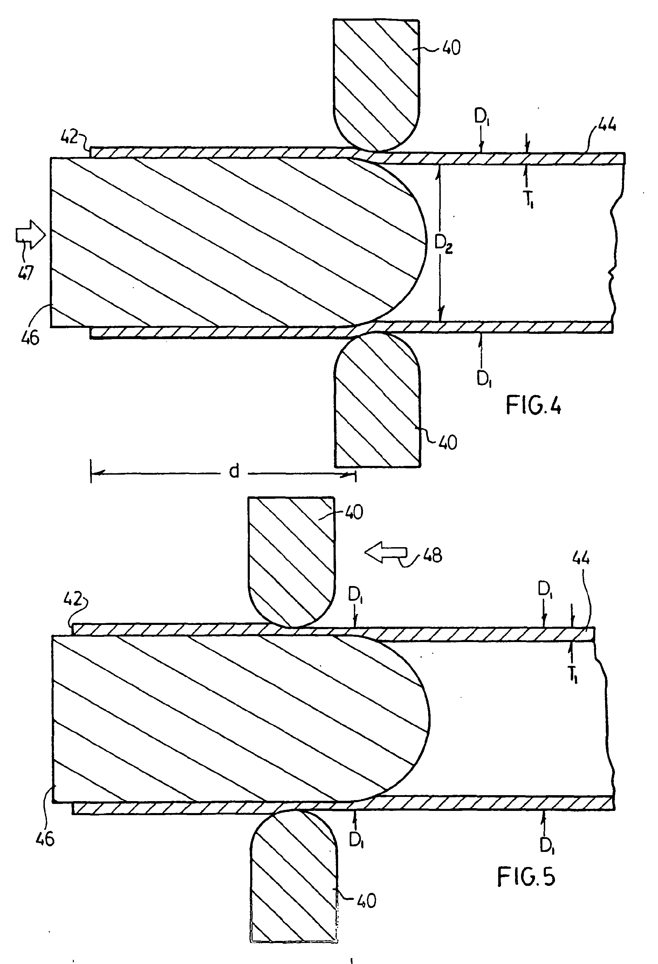

As shown in Figure 4, the second step of the method, involves the insertion of a mandrel 46 into the lumen of the hollow tube 44, in a direction shown by the arrow 47. The mandrel is inserted over a distance "d" of the tube 44, measured from the first end 42. The distance, d, is generally and preferably, slightly shorter that the desired length of the terminal, energy absorbing portion of the structural member being formed. As explained further below, it will be understood that the mandrel can be inserted a distance greater than d and the extra length can be trimmed. However, as will be understood, this will require an added step and, therefore, may not be preferred. As shown in Figure 4, the diameter of the mandrel 46 is preferably slightly greater than the inner diameter D₂ of the tube 44, which causes the tube 44 to expand slightly upon insertion of the mandrel 46. Moreover, as will be explained further below, the difference between the diameter of the mandrel 46 and the opening of the die 40 (the latter of which is generally equal to the outer diameter, D₁, of the tube 44) is less than the wall thickness T₁ of the tube 44. Mandrels for this step of the method are commonly known in the art.

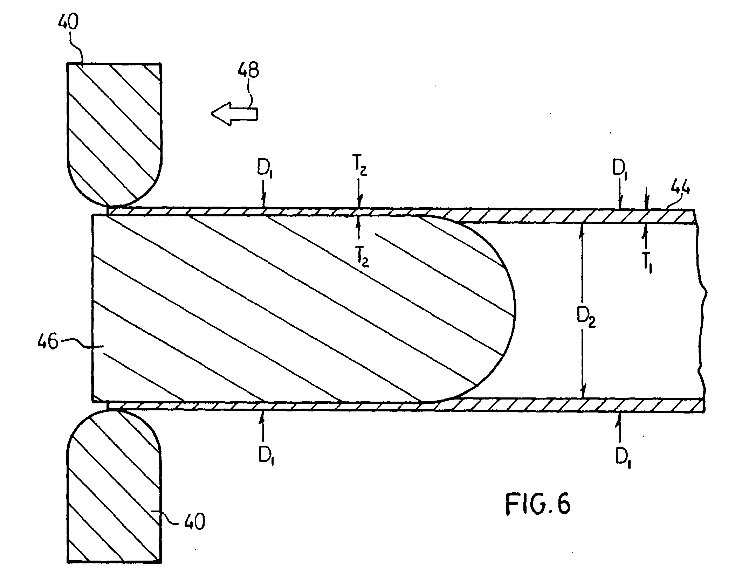

Figures 5 and 6 illustrate the next step of the method wherein the die 40 is removed from the tube 44. As shown, the die 40 is slid back toward end 42 of the tube 44, in the direction shown by arrow 48, which is the opposite direction of arrow 45 shown in Figure 3. As shown in Figure 5, as the die 40 is removed, it passes over the mandrel 46, which remains in place within the tube 44. In the result, the wall thickness of the tube 44 is forcibly reduced to a thickness T₂, which corresponds generally to the clearance between the diameter of the mandrel 46 and the opening of the die 40. It is noted that the outer diameter D₁ of the tube 44 is maintained constant since, as indicated above, the die is configured to have an opening generally corresponding to the outer diameter D₁ of the tube 44.

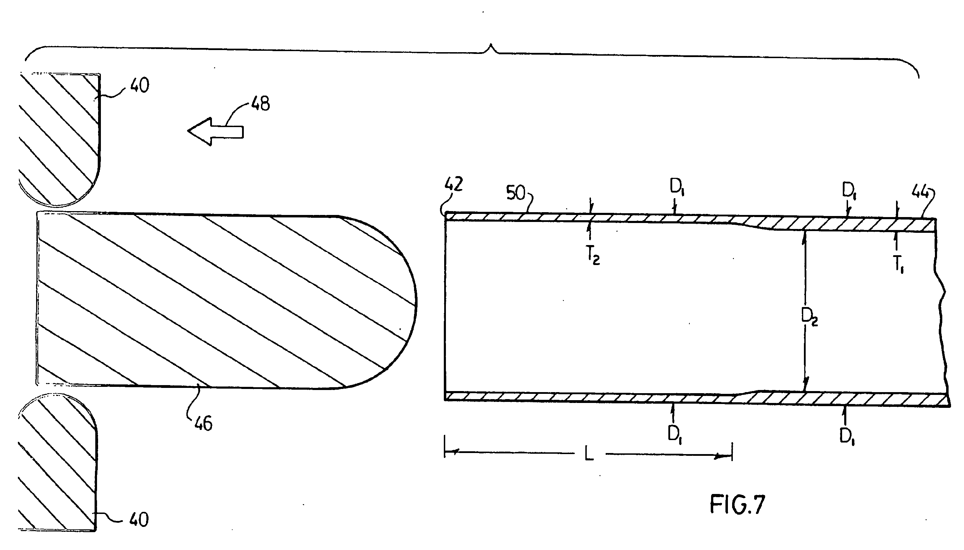

Figure 7 illustrates the final step of the gauge reduction stage of the method wherein, once the die 40 is removed, the mandrel 46 is also withdrawn from tube 44, in the direction 48. As shown in Figure 7, the result of the removal of the die 40 and mandrel 46 is a tube 44 having a thin walled end portion 50. The wall thickness of the end portion 50 is shown as T₂. As shown, the outer diameter D₁ of the end portion 50 is preferably generally the same as that of the remainder of the tube 44. The end portion 50 of the tube 44 is of a length L, which is, as discussed above, generally longer than d, the distance the mandrel is inserted, due to the fact that the length of the tube is normally increased during the gauge reduction process. As indicated above, in the preferred embodiment, L corresponds generally to the desired length of the end energy-absorbing portion of the structural member being formed. However, in the event that L is longer than such desired length, the excess can be trimmed.

### Step 2) Tapering

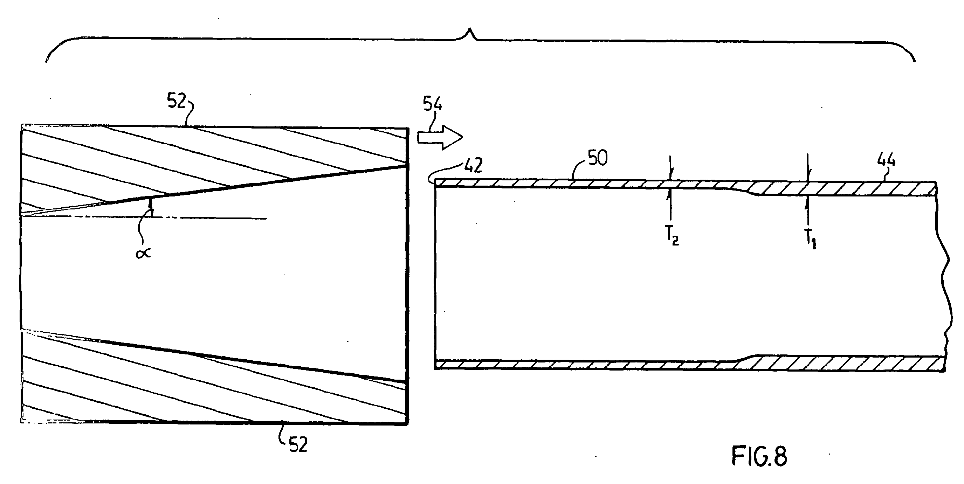

Figures 8 to 11 illustrate the steps of the tapering the tube 44 following gauge reduction. In the first step, as shown in Figures 8, a tapered die 52 is advanced towards the end 42 of the tube 44. It is noted that end 42 is the reduced wall thickness end portion 50 of the tube 44. As shown in figure 8, the tapered die 52 is advanced towards the stationary tube 44 in the direction shown by arrow 54. The die 52 includes a taper of an angle α, which will vary depending on the required tapering of the tube 44. The specific geometry of the tapering die 52 will be apparent to persons skilled in the art based on the need.

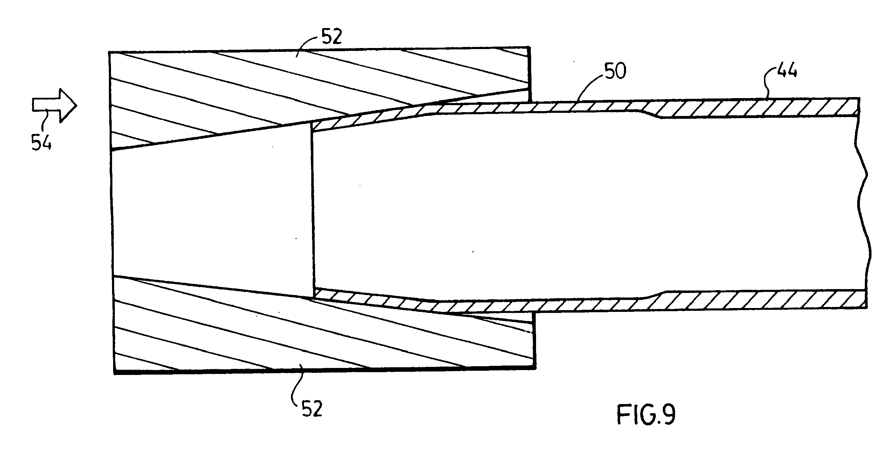

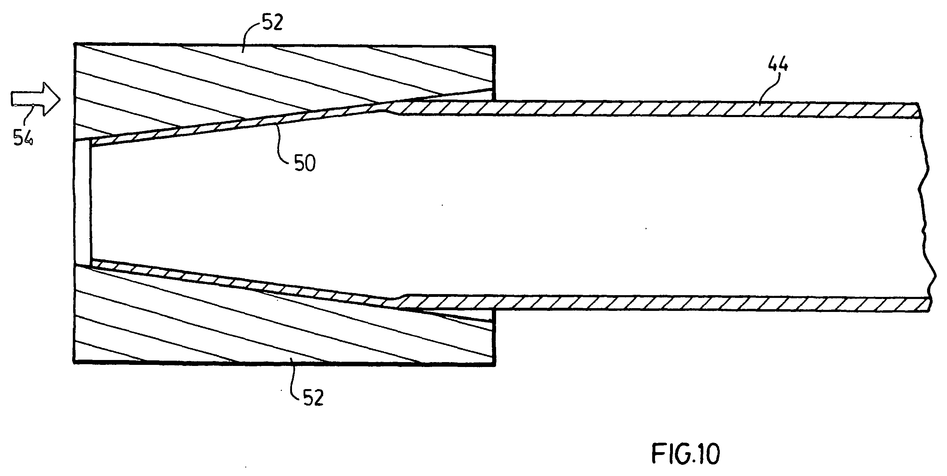

As shown in Figures 9 and 10, as the tapered die 52 is advanced over the end portion 50 of the tube 44, the end portion 50 is gradually reduced in diameter to provide the tube 44 with a tapered end.

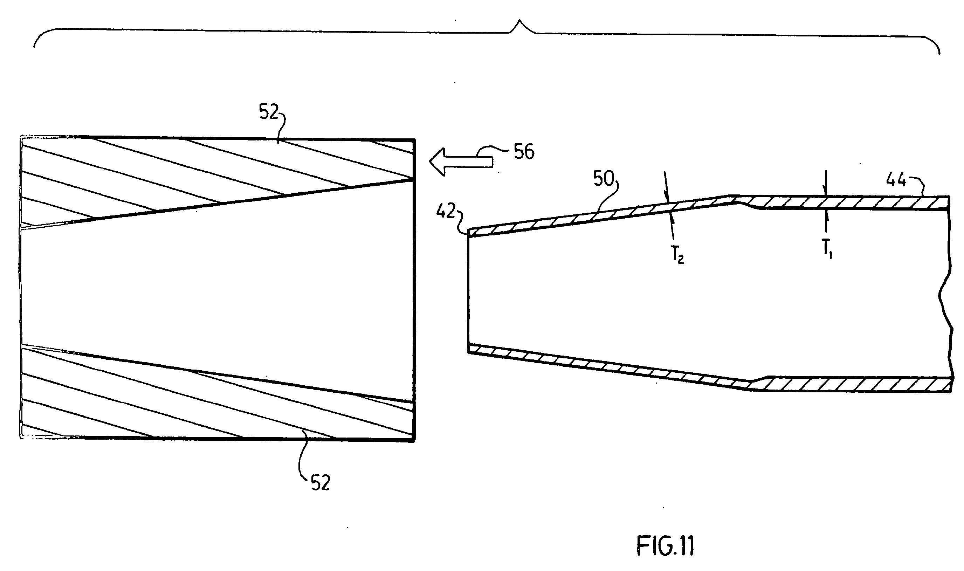

In Figure 11, the tapered die 52 is shown being withdrawn off the end portion 50 of the tube 44 in the direction shown by arrow 56. The resulting tube 44 includes an end portion 50 having a reduced wall thickness T₂ and a tapered outer diameter. As explained above, the reduced wall thickness of the end portion 50 is structurally weaker than the remainder of the tube 44 and, therefore, is more susceptible to deformation during an impact on end 42. As such, the end portion 50 serves to absorb the energy of an impact prior to it being transferred to the remainder of tube 44. Furthermore, the tapering of the end portion 50 aids the initialization of the deformation process.

The tube 44, after being tapered may then be formed to the desired final shape of the structural member using any conventional process such as hydroforming etc. It will be understood that the above description refers to "diameters" of the tube and end portions. However, it will be understood that the above forming process can also be conducted on a pre-formed member having another geometry. In such case, the dies and mandrel discussed above will have the respective shapes of the member being formed. For example, the die and mandrel may have a square or rectangular design should the final tube have such geometry.

In another embodiment, the tapered section of the members can be provided along only a portion of the reduced wall thickness region while still serving to initiate deformation.

## Claims

1. A unitary hollow structural member (30) for a vehicle frame adapted to be axially deformed upon application of a force on a first end thereof, said member :
- having a body (32) with a generally constant first wall thickness (T₁), with the first end of the member including a weakened section (34) having a generally constant second wall thickness (T₂), wherein said second wall thickness (T₂) is less than said first wall thickness (T₁); and
- said first end further including a deformation initiation site comprising a tapered portion, wherein the cross sectional area of said tapered portion is gradually reduced along an axial direction towards said first end.

2. The structural member (30) of claim 1 wherein the entire length of said tapered portion comprises the second wall thickness (T₂).

3. The structural member (30) of claim 1 or 2 wherein said structural member comprises a vehicle frame side rail, cradle, or pillar.

4. A method for forming a hollow structural member (30) for a vehicle frame and having a weakened end section (34) integral therewith for absorbing energy, said end section (34) having a reduced wall thickness (T₂), the method comprising the steps of:
- providing a tubular member to be formed, the tubular member having a generally constant first wall thickness (T₁) and a first end to be provided with said weakened portion;
- providing a first die having an opening corresponding generally with the outer dimensions of the tubular member;
- providing a mandrel capable of being inserted within the said first die opening, the clearance between said mandrel and the die opening corresponding to the reduced wall thickness (T₂);
- placing the tubular member within the first die opening and axially moving the first die over a first length of the tubular member;
- inserting the mandrel into the first end of the tubular member along a second length of the tubular member less than the first length, said second length comprising the length of the end section;
- sliding the first die over the tubular member and over the mandrel thereby causing the wall thickness of the tubular member first end to be reduced to a generally constant thickness corresponding to said reduced wall thickness, (T₂);
- extracting the mandrel from the tubular member;
- providing a second die having a tapered die opening with an inlet section having the larger diameter;
- introducing said tubular member first end into the inlet section of the second die opening and forcing constriction of said first end section to assume the shape of the second die opening while maintaining said generally constant reduced wall thickness, (T₂).

5. The method of claim 4 wherein said structural member (30) comprises a vehicle frame side rail, cradle, or pillar.

## Patentansprüche

1. Ein zusammenhängendes hohles Konstruktionselement (30) für einen Fahrzeugrahmen, welches dafür ausgelegt ist, bei Einwirken einer Kraft auf ein erstes Ende des Elementes in axialer Richtung deformiert zu werden, wobei das Element
- einen Körper (32) mit einer im Allgemeinen konstanten, ersten Wandstärke (T₁) aufweist, wobei das erste Ende des Elementes einen geschwächten Abschnitt (34) umfasst, welcher eine im Allgemeinen konstante, zweite Wandstärke (T₂) aufweist, wobei die zweite Wandstärke (T₂) kleiner ist als die erste Wandstärke (T₁); und
- das besagte erste Ende weiterhin eine Deformationsinitiierungsstelle aufweist, welche einen konisch zulaufenden Bereich umfasst, wobei die Querschnittsfläche dieses konisch zulaufenden Bereichs allmählich in axialer Richtung zu dem ersten Ende hin abnimmt.

2. Konstruktionselement (30) nach Anspruch 1, bei welchem der konisch zulaufende Bereich über dessen gesamte Länge die zweite Wandstärke (T₂) aufweist.

3. Konstruktionselement (30) nach Anspruch 1 oder 2, bei welchem das Konstruktionselement einen Fahrzeugrahmen-Längsträger, einen Hilfsrahmen oder eine Säule umfasst.

4. Verfahren zur Umformung eines hohlen Konstruktionselementes (30) für einen Fahrzeugrahmen, das einen in demselben integrierten, geschwächten Endabschnitt (34) für die Absorption von Energie aufweist, wobei der Endabschnitt (34) eine verminderte Wandstärke (T₂) aufweist und das Verfahren die folgenden Verfahrensschritte umfasst:
- Bereitstellen eines umzuformenden rohrförmigen Elementes, wobei das rohrförmige Element eine im Allgemeinen konstante, erste Wandstärke (T₁) sowie ein erstes Ende aufweist, das mit dem geschwächten Bereich versehen werden soll;
- Bereitstellen einer ersten Matrize mit einer Öffnung, die im Allgemeinen mit den Außenabmessungen des rohrförmigen Elementes übereinstimmt;
- Bereitstellen eines Dorns, der in die Öffnung in der ersten Matrize eingeführt werden kann, wobei der Spielraum zwischen dem Dorn und der Matrizenöffnung der verminderten Wandstärke (T₂) entspricht;
- Anordnen des rohrförmigen Elementes in der Öffnung der ersten Matrize und Bewegen der ersten Matrize in axialer Richtung über eine erste Länge des rohrförmigen Elementes;
- Einführen des Dorns in das erste Ende des rohrförmigen Elementes entlang einer zweiten Länge des rohrförmigen Elementes, welche kleiner ist als die erste Länge, wobei die zweite Länge die Länge des Endabschnitts umfasst;
- gleitendes Verschieben der ersten Matrize über das rohrförmige Element und über den Dorn, wodurch die Wandstärke des ersten Endes des Rohrelementes auf eine im Allgemeinen konstante Dicke vermindert wird, welche der besagten verminderten Wandstärke (T₂) entspricht;
- Herausziehen des Dorns aus dem rohrförmigen Element;
- Bereitstellen einer zweiten Matrize, die eine konisch zulaufende Matrizenöffnung aufweist, deren Eintrittsbereich den größeren Durchmesser aufweist;
- Einführen des ersten Endes des rohrförmigen Elementes in den Eintrittsbereich der Öffnung der zweiten Matrize und Hervorrufen einer Verengung des Abschnitts des besagten ersten Endes, so dass dieser die Form der Öffnung der zweiten Matrize annimmt, während die im Allgemeinen konstante, verminderte Wandstärke (T₂) beibehalten wird.

5. Verfahren nach Anspruch 4, bei welchem das Konstruktionselement (30) einen Fahrzeugrahmen-Längsträger, einen Hilfsrahmen oder eine Säule umfasst.

## Revendications

1. Élément de structure unitaire creux (30) pour un châssis de véhicule adapté pour être axialement déformé lors de l'application d'une force sur une première extrémité de celui-ci, ledit élément :
- comprenant un corps (32) avec une première épaisseur de paroi généralement constante (T₁), la première extrémité de l'élément comprenant une section affaiblie (34) comportant une deuxième épaisseur de paroi généralement constante (T₂), dans lequel ladite deuxième épaisseur de paroi (T₂) est inférieure à ladite première épaisseur de paroi (T₁) ; et
- ladite première extrémité comprenant en outre un emplacement de début de déformation comprenant une partie effilée, dans laquelle la zone de section transversale de ladite partie effilée est progressivement réduite le long d'une direction axiale vers ladite première extrémité.

2. Élément de structure (30) selon la revendication 1, dans lequel la longueur totale de ladite partie effilée comprend la deuxième épaisseur de paroi (T₂).

3. Élément de structure (30) selon la revendication 1 ou 2, dans lequel ledit élément de structure comprend un longeron de cadre de châssis de véhicule, un berceau ou un montant.

4. Procédé de formation d'un élément de structure creux (30) pour un châssis de véhicule et comportant une section d'extrémité affaiblie (34) solidaire avec celui-ci pour absorber l'énergie, ladite section d'extrémité (34) comportant une épaisseur de paroi réduite (T₂), le procédé comprenant les étapes de :
- fourniture d'un élément tubulaire devant être formé, l'élément tubulaire comportant une première épaisseur de paroi généralement constante (T₁) et une première extrémité devant être munie de ladite partie affaiblie ;
- fourniture d'une première matrice comportant une ouverture correspondant généralement aux dimensions externes de l'élément tubulaire ;
- fourniture d'un mandrin pouvant être inséré à l'intérieur de ladite ouverture de première matrice, le jeu entre ledit mandrin et ladite ouverture de matrice correspondant à l'épaisseur de paroi réduite (T₂) ;
- placement de l'élément tubulaire à l'intérieur de l'ouverture de la première matrice et déplacement axial de la première matrice sur une première longueur de l'élément tubulaire ;
- insertion du mandrin dans la première extrémité de l'élément tubulaire le long d'une deuxième longueur de l'élément tubulaire inférieure à la première longueur, ladite deuxième longueur comprenant la longueur de la section d'extrémité ;
- glissement de la première matrice sur l'élément tubulaire et sur le mandrin amenant de ce fait l'épaisseur de paroi de la première extrémité de l'élément tubulaire à être réduite à une épaisseur généralement constante correspondant à ladite épaisseur de paroi réduite (T₂) ;
- extraction du mandrin de l'élément tubulaire ;
- fourniture d'une deuxième matrice comportant une ouverture de matrice effilée avec une section d'entrée comportant le diamètre plus important ;
- introduction de ladite première extrémité de l'élément tubulaire dans la section d'entrée de l'ouverture de la deuxième matrice et forcement du resserrement de ladite première section d'extrémité pour prendre la forme de l'ouverture de la deuxième matrice tout en maintenant ladite épaisseur de paroi réduite généralement constante (T₂).

5. Procédé selon la revendication 4, dans lequel ledit élément de structure (30) comprend un longeron de cadre de châssis de véhicule, un berceau ou un montant.
